# EUROPEAN PATENT APPLICATION

(11) **EP 4 756 517 A1**
(43) Date of publication of application: **10.06.2026**
(21) Application number: 24849011.2
(22) Date of filing: 24.07.2024
(51) Int. Cl.: G02B 30/50, G02B 26/10, G02B 30/24, G09F 19/02, G09F 19/12

(54) **STRUCTURE AND DISPLAY DEVICE**

(30) Priority: 31.07.2023 JP 2023124249
(71) Applicant: JVCKenwood Corporation, Yokohama-shi, Kanagawa 2210022 (JP)
(72) Inventor: OKA Hisashi, Yokohama-shi, Kanagawa 221-0022 (JP)
(74) Representative: Potter Clarkson
(86) International application number: PCT/JP2024/026423
(87) International publication number: WO 2025/028356

(57) **Abstract**

There are provided a structure and a display apparatus, each of which expands a light-emitting region. A structure (100) is provided that includes a partition plate (103) that separates a first space (101) from a second space (102), in which the first space is filled with a gas that emits light of a first color when irradiated with laser light, the second space is filled with a gas that emits light of a second color when irradiated with the laser light, and the partition plate contains a phosphor that emits light of a third color when irradiated with the laser light. The structure may be cylindrical and the partition plate may be spiral-shaped. Alternatively, the structure may be prismatic and the partition plate may be flat plate-shaped.

## Description

### Technical Field

The present disclosure relates to a structure and a display apparatus.

### Background Art

Development of displays is progressing, and various methods have been proposed. Patent Literature 1 discloses a display apparatus including an object that is irradiated with image light based on image information, a control device that controls the object so that a color at a position irradiated with the image light changes, and an irradiation device that irradiates the object with monochromatic image light based on the image information.

### Citation List

### Patent Literature

Patent Literature 1: Japanese Unexamined Patent Application Publication No. 2022-103914

### Summary of Invention

The display apparatus in Patent Literature 1 has a spiral body that is divided into multiple portions, each of which emits light, moves. However, the display apparatus in Patent Literature 1 was able to emit light only in a region of the spiral body. Therefore, the display apparatus in Patent Literature 1 had difficulty in synchronizing the spiral body and the image light.

An object of the present disclosure is to provide a structure and a display apparatus that expand a light-emitting region.

A structure of the present disclosure is a structure that includes
a partition plate that separates a first space from a second space,
in which the first space is filled with a gas that emits light of a first color when irradiated with laser light,
the second space is filled with a gas that emits light of a second color when irradiated with the laser light, and
the partition plate contains a phosphor that emits light of a third color when irradiated with the laser light.

The present disclosure provides the structure and the display apparatus that expand a light-emitting region.

### Brief Description of Drawings

Fig. 1A is a top view of a structure according to a first embodiment.
Fig. 1B is a side view of the structure according to the first embodiment of Fig. 1A, as viewed from B.
Fig. 1C is a C-C cross-sectional view of the structure according to the first embodiment of Fig. 1A.
Fig. 2 is a diagram of variations of a partition plate installed in a structure according to a second embodiment.
Fig. 3 is a schematic cross-sectional view of a structure according to the second embodiment.
Fig. 4 is a schematic cross-sectional view of the structure according to the second embodiment irradiated with laser light.
Fig. 5 is a diagram illustrating displaying by irradiating the structure according to the second embodiment with laser light.
Fig. 6 is a diagram illustrating displaying by irradiating a related structure with laser light.
Fig. 7 is a schematic diagram of a display apparatus using a structure according to the first and second embodiments.
Fig. 8 is a block diagram showing a configuration of a control device, a sensor, and a light source of the display apparatus using the structure according to the first and second embodiments.
Fig. 9 is a flowchart for display with the display apparatus using the structure according to the first and second embodiments.
Fig. 10 is a diagram illustrating a configuration of a partition plate when a related structure is irradiated with laser light.
Fig. 11 is a diagram illustrating a configuration of a partition plate when a structure according to a third embodiment is irradiated with laser light.
Fig. 12 is a diagram illustrating a configuration of a laser light source when a related structure is irradiated with laser light.
Fig. 13 is a diagram illustrating a configuration of a laser light source when a structure according to a fourth embodiment is irradiated with laser light.

### Description of Embodiments

### (Embodiments)

Embodiments of the present invention will now be described with reference to the drawings. However, the scope of the claimed invention is not limited to the following embodiments. Furthermore, not all of the configurations described in the embodiments are necessarily essential as means for solving the problem. For clarity, the following description and drawings are partially omitted and simplified as appropriate. In each of the drawings, the same elements are denoted by the same reference numerals and characters, and duplicate descriptions are omitted as necessary.

### (Description of Structure According to First and Second Embodiments)

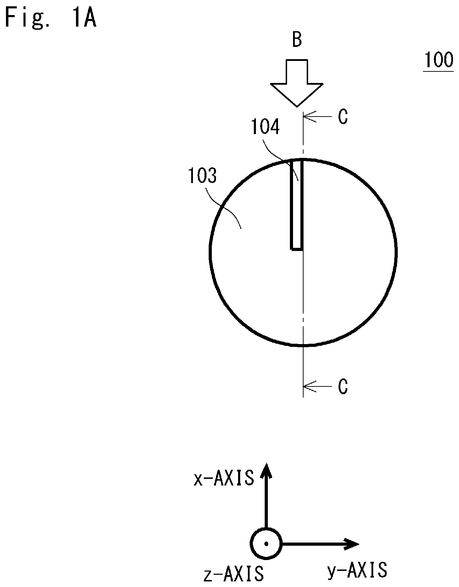

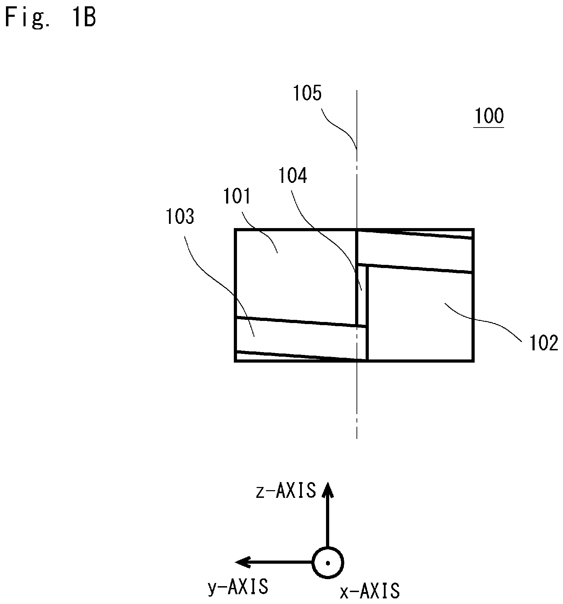

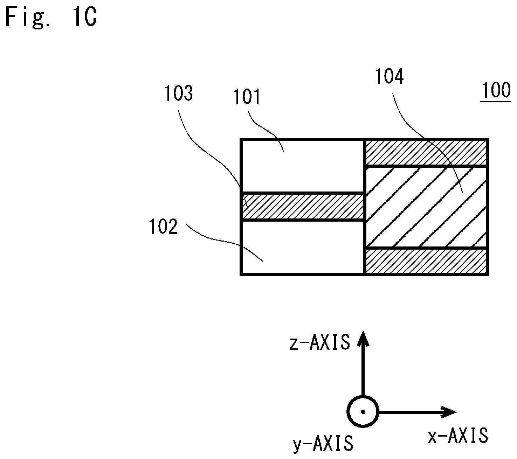

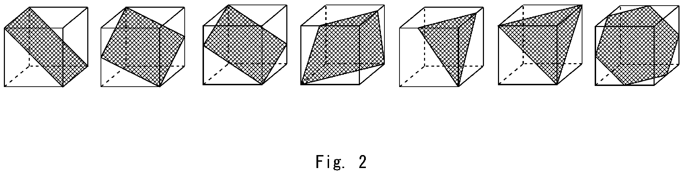

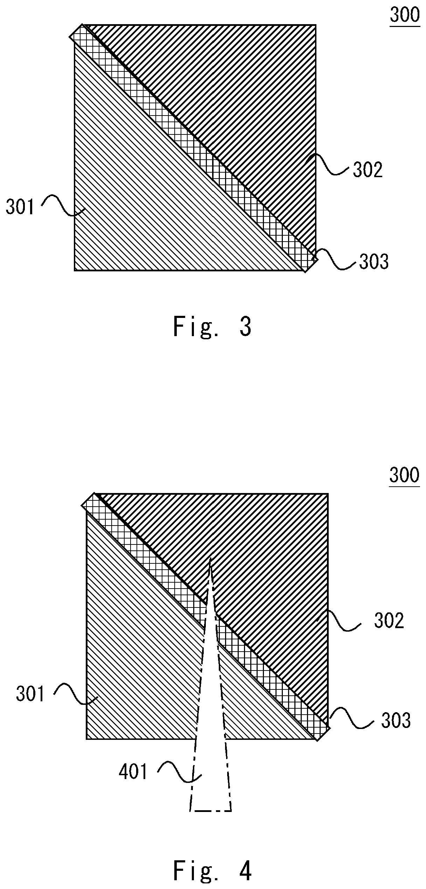

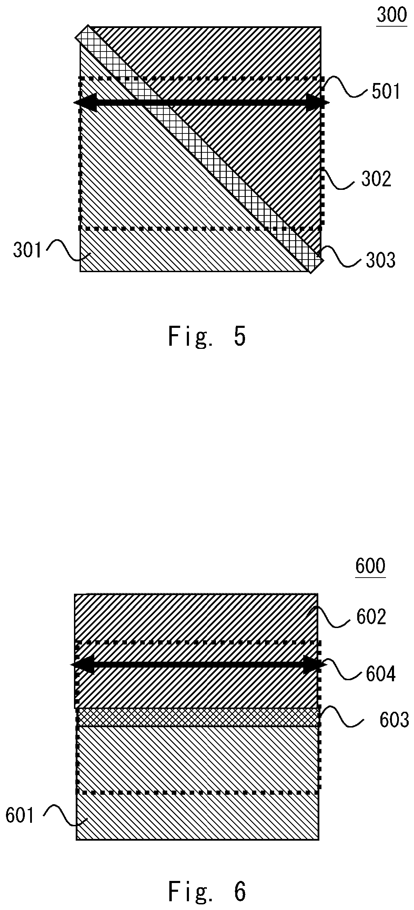

Structures according to the embodiments will be described with reference to Figs. 1A to 1C through 6. Fig. 1A is a top view of a structure according to a first embodiment. Fig. 1B is a side view of the structure according to the first embodiment of Fig. 1A, viewed from B. Fig. 1C is a C-C cross-sectional view of the structure according to the first embodiment of Fig. 1A. Fig. 2 is a diagram of variations of partition plates installed in a structure according to a second embodiment. Fig. 3 is a schematic cross-sectional view of the structure according to the second embodiment. Fig. 4 is a schematic cross-sectional view of the structure according to the second embodiment irradiated with laser light. Fig. 5 is a diagram illustrating displaying by irradiating the structure according to the second embodiment with laser light. Fig. 6 is a diagram illustrating displaying by irradiating a related structure with laser light. A structure according to the first and second embodiments is used in a display apparatus that displays a predetermined image by radiating laser light from the bottom surface as excitation light and emitting light emitted by the excitation light from the side surface or upper surface.

As shown in Figs. 1A to 1C, the structure 100 according to the first embodiment includes a first space 101, a second space 102, a partition plate 103, and a partition plate vertical portion 104. The structure 100 is cylindrical. For reference, Figs. 1A to 1C show an x-axis, a y-axis, and a z-axis of a three-dimensional coordinate system. The partition plate 103 is spiral-shaped and separates the first space 101 from the second space 102. The structure 100, the partition plate 103, and the partition plate vertical portion 104 are made of transparent materials, such as glass or plastic.

The first space 101 is filled with a gas that emits light of a first color when irradiated with laser light. The first space 101 is filled with a gas that emits light of red, such as neon gas.

The second space 102 is filled with a gas that emits light of a second color when irradiated with laser light. The second space 102 is filled with a gas that emits light of blue, such as argon gas. The first space 101 and the second space 102 are completely separated by the partition plate 103 and the plate, and the gases inside do not mix.

The partition plate 103 emits light of a third color when irradiated with laser light. The partition plate 103 contains a green nitride phosphor such as beta-sialon. It is also preferable that the partition plate vertical portion 104 contains no green nitride phosphor.

By rotating such a cylindrical structure and radiating laser light from the bottom, a space can be created that emits red, blue, or green light in a time-division manner. The rotation may be around the central axis 105. The cylindrical structure may also be rotated with a radius defined by an extension of an axis that passes through the center of the cylindrical structure and is perpendicular to the side surface of the cylindrical structure.

The structure is not limited to the cylindrical structure described above, and may be a prismatic structure. In other words, the structure may be a pillar-shaped structure. The prismatic structure may be a cube, rectangular parallelepiped, triangular prism, pentagonal prism, or other polygonal prism. As shown in Fig. 2, the prismatic structure holds a partition plate having a flat plate shape, which are shown in shaded areas, thereby enabling color display.

It is preferable that the partition plate having a flat plate shape be held so as to cross all of the coordinate axes of three-dimensional coordinate system of the prismatic structure, that is, the x-axis, y-axis, and z-axis. It is also preferable that the partition plate having a flat plate shape separates the first space 101 and the second space 102 of the prismatic structure to equalize their volumes. The prismatic structure is rotated with a radius defined by an extension of an axis that passes through the center of the prismatic structure and is perpendicular to the side surface of the prismatic structure. In other words, as shown in Fig. 3, the structure only needs to be such that when the structure is rotated in a positional relationship between the structure and rotation center, the first space 301, second space 302, and partition plate 303 pass through a certain space. This allows three-dimensional display to be displayed in color.

Fig. 3 can also be seen as a diagram that schematically shows a cross section of a cubic structure in which the partition plates pass through the diagonal vertices of a square. The following description will be based on this diagram. Consider a case in which the structure 300 is irradiated with the laser light 401, as shown in Fig. 4. Attempt to emit red light in the structure of Fig. 3 causes the laser light for promoting the emission to pass through the blue-emitting region and green-emitting region before reaching the red-emitting region. With such an optical path, light of other colors may be emitted in addition to the desired red. Therefore, in order to emit light of a desired color, there is used an ionization phenomenon such as: light emission by absorbing two or more photons, instead of light emission by absorbing a single photon; or tunnel ionization by concentrating a powerful laser light.

The wavelength of the laser light is preferably outside the visible range. For example, infrared light with a wavelength of 780 nm or greater or ultraviolet light with a wavelength of 380 nm or less can be used. If the laser light is in the visible range, even if the object does not emit light, the laser light may be visible due to the Tyndall effect, causing light mixing. Mixed light will not be light of the intended color.

Fig. 5 is a diagram describing a drawing region 501 in Fig. 3. The drawing region 501 is a region indicated by the dotted line. The drawing region 501 is a region within a certain space through which the structure passes and is a region in which drawing is made by the radiated laser light. The light-emitting region is a region that emits light of a predetermined color by laser light, and includes the first space 301, second space 302, and partition plate 303. With reference to Figs. 5 and 6, how to move structure 300 to form drawing region 501 will be described. As described above, the structure 300 is rotated with a radius defined by an extension of an axis that passes through the center of the structure and is perpendicular to the side surface of the structure. At this time, the structure 300 physically moves laterally, but the movement is here regarded as horizontal movement in the lateral direction and this is indicated by an arrow in Fig. 5. To display any of red, green, and blue at all positions in the drawing region 501, all of the red, green, and blue light-emitting regions need to pass through the drawing region 501 when the light-emitting structure 300 is shifted in the same direction as the rotation.

Meanwhile, Fig. 6 shows an example in which a structure 600 with partition plate 603 positioned perpendicular to the laser light is rotated in the same manner as the structure 300. In this case, in the upper part of the drawing region 604, only the red-emitting region 602 is present, and the blue-emitting region 601 and the green partition plate 603 are not present. Therefore, only red light can be emitted in the upper part of the drawing region 604, and display in multiple colors is not allowed. Thus, in order to emit all colors in the drawing region 604, all of the red, green, and blue light-emitting regions need to pass through the drawing region 604.

### (Description of Display Apparatus Using Structure According to First and Second Embodiments)

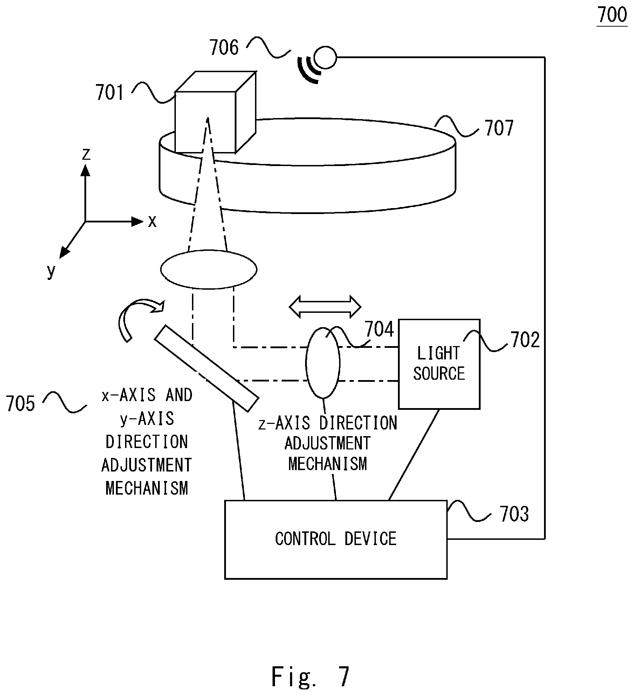

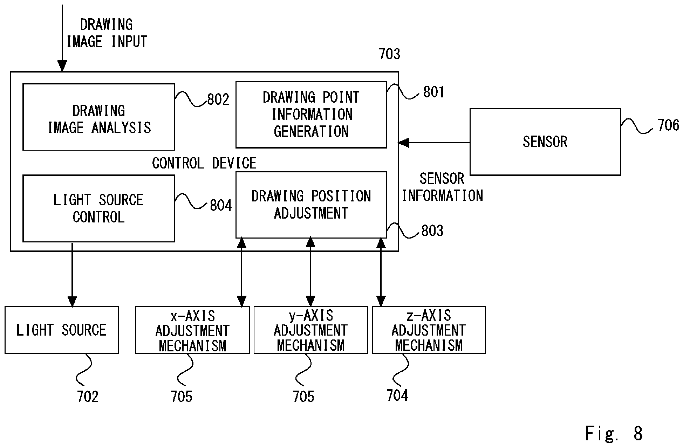

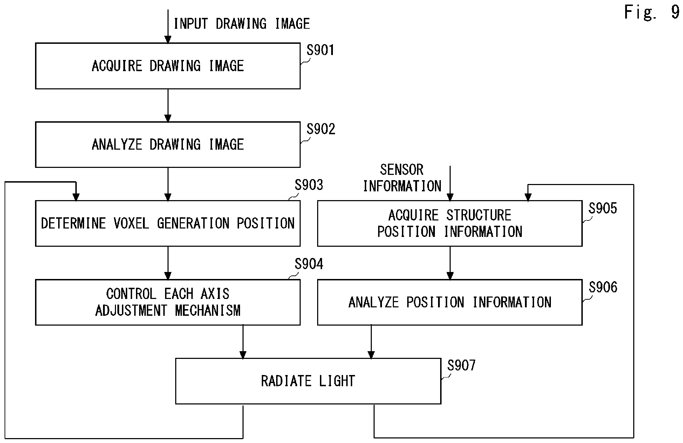

Fig. 7 is a schematic diagram of a display apparatus using a structure according to the first and second embodiments. Fig. 8 is a block diagram showing a configuration of a control device, a sensor, and a light source of the display apparatus using the structure according to the first and second embodiments. Fig. 9 is a flowchart for display with the display apparatus using the structure according to the first and second embodiments. The display apparatus using the structures according to the first and second embodiments will be described with reference to Figs. 7 to 9.

As shown in Figs. 7 and 8, a display apparatus 700 using the structure according to the first and second embodiments includes a structure 701, a light source 702, a control device 703, a z-axis direction adjustment mechanism 704, an x-axis and y-axis direction adjustment mechanism 705, a sensor 706, and a rotation mechanism 707.

The structure 701 is a structure described in the first and second embodiments. The structure 701 is placed on and rotated by a rotation mechanism 707. The rotation mechanism 707 is a platform that rotates like a turntable. In Fig. 7, the central axes of the rotation mechanism 707 and the structure 701 are different, but in the case of the structure according to the first embodiment, the central axes of rotation mechanism 707 and structure 701 may be the same axis. Furthermore, although the mechanism for moving the structure 701 is now the rotation mechanism 707, it may also be a platform that performs simple harmonic motion to reciprocate along a single horizontal axis.

The x-axis, y-axis, and z-axis are three-dimensional coordinate axes that are orthogonal to each other. The height direction of the structure 701 is the z-axis, and the horizontal directions are the x-axis and y-axis. Therefore, the bottom surface of the structure 701 is the xy plane facing rotation mechanism 707. The side surface of the structure 701 is a plane parallel to the z-axis, and the upper surface of the structure 701 is the xy plane opposite 702 and the rotation mechanism 707.

The light source 702 is a light source that emits the monochromatic laser light described above, and uses a laser irradiation device, for example. The laser light emitted from the light source 702 is controlled to be focused at a predetermined position by axial adjustment mechanisms of the x-axis and y-axis direction adjustment mechanism 705 and the z-axis direction adjustment mechanism 704, and a focusing lens. The predetermined position is based on drawing information input to the control device.

As shown in Fig. 8, the control device 703 includes a drawing point information generation unit 801, a drawing image analysis unit 802, a drawing position adjustment unit 803, and a light source control unit 804. The control device 703 is connected to the sensor 706 and acquires sensor information. The sensor information is position information obtained by sensing the structure 701 with the sensor 706. The control device 703 uses the sensor 706 to synchronize the position of the structure 701 with the laser light.

Specifically, the drawing image analysis unit 802 analyzes how to draw in the drawing region based on the input drawing image, and generates drawing image information. The drawing image information is position information on the x-axis, y-axis, and z-axis for the three colors, red, green, and blue, that constitute the drawing image. The drawing point information generation unit 801 determines a position in the drawing region where to generate drawing points based on analysis information. The analysis information is information obtained by analyzing the position information of the structure 701 and the position of the light point. The drawing point refers to a predetermined point to which the laser light is radiated based on the drawing image information.

The control device 703 is configured with a so-called information processing device. The information processing device includes a processor such as a CPU (Central Processing Unit) that executes programs, and a memory that stores programs. The memory to be used can be any type of storage device, such as RAM (Random Access Memory) or ROM (Read Only Memory). The information processing device may be configured with a single device or configured with multiple devices. The information processing device may also be a cloud server that distributes processing of some or all of its functions.

The drawing position adjustment unit 803 controls position adjustment mechanisms for guiding the laser light to the drawing region based on the drawing image information. The position adjustment mechanisms include the z-axis direction adjustment mechanism 704 and the x-axis and y-axis direction adjustment mechanism 705. The light source control unit 804 controls the light source 702 based on the relative position information obtained by the sensor. The relative position information is position information of the structure 701 relative to the drawing point. The light source control unit 804 determines the timing of radiating the laser light based on the sensed position information of the structure 701.

The control device 703 controls the light source 702 based on the drawing image information, thereby causing the laser light to make a scan of the structure 701. As the structure 701 crosses the entire drawing region, the laser light having made a scan causes the structure 701 to emit light.

The z-axis direction adjustment mechanism 704 is a mechanism for aligning the light emitted from the light source 702 with a predetermined position in the drawing region. The z-axis direction adjustment mechanism 704 is, for example, a lens that moves in the direction of an arrow in Fig. 7. The z-axis direction adjustment mechanism 704 moves in the direction of the arrow, thereby making it possible to move the focal point and change the position of the light-emitting point in the z-axis direction.

The x-axis and y-axis direction adjustment mechanism 705 is a mechanism for aligning the light emitted from the light source 702 with a predetermined position in the drawing region. The x-axis and y-axis direction adjustment mechanism 705 is, for example, a mirror that moves in the direction of an arrow in Fig. 7. The x-axis and y-axis direction adjustment mechanism 705 is moved diagonally with respect to the xy plane to change the direction of the laser light, thereby making it possible to change the position of the light-emitting point on the x-axis and y-axis.

The sensor 706 is a sensor that senses the position of the structure 701. The sensor 706 is, for example, a camera. The sensor 706 may also be an optical sensor.

As shown in Fig. 9, the control device 703 acquires the input drawing image (step S901). Next, the drawing image analysis unit 802 analyzes the drawing image (step S902). Next, the drawing point information generation unit 801 determines the generation positions of the drawing points of the drawing image (step S903). Next, the light source control unit 804 controls the laser irradiation device, and the drawing position adjustment unit 803 controls the z-axis direction adjustment mechanism 704 and the x-axis and y-axis direction adjustment mechanism 705 to control the laser light (step S904). Along with the input of the drawing image, the control device 703 acquires sensor information from the sensor 706, and position information of the structure 701 is obtained (step S905). Next, the control device 703 analyzes the position information of the structure 701 (step S906). After steps S904 and S906, the light source control unit 804 radiates light (step S907). After step S907, steps S903 and S905 are implemented continuously, and the display apparatus 700 displays the image in a time-division manner.

### (Description of Structure According to Third Embodiment)

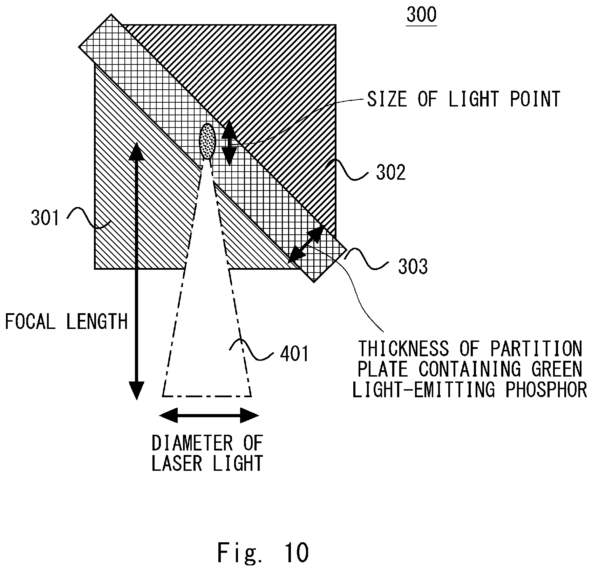

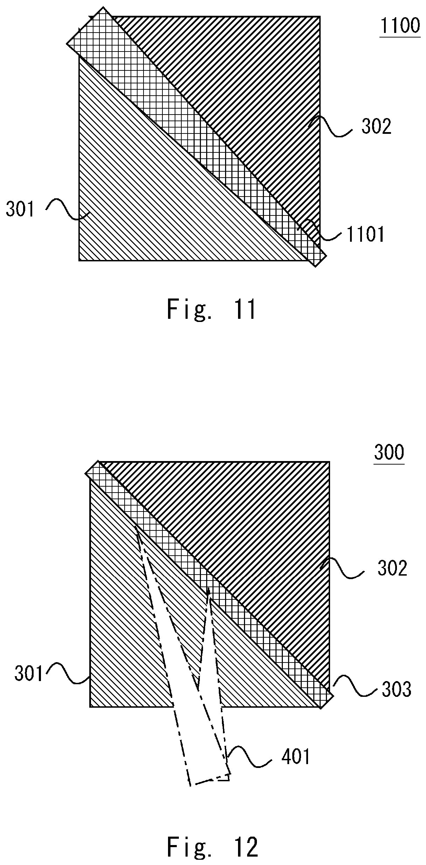

Fig. 10 is a diagram illustrating the configuration of a partition plate when a related structure is irradiated with laser light. Fig. 11 is a diagram illustrating the configuration of a partition plate when a structure according to the third embodiment is irradiated with laser light. The structure according to the third embodiment will be described with reference to Figs. 10 and 11.

As shown in Fig. 10, the size of the light point is determined by the wavelength of the incident laser light 401, the diameter and angle of the incident laser light 401, the focal length of the lens, and the like. It is important to match the thickness of the partition plate 303 to the size of the light point.

For example, the size of the light point at the focal point changes between a light point generated at a position where the focal length is long and a light point generated at a position where the focal length is short. In other words, the length of the light point increases when the focal length is long, and decreases when the focal length is short. Therefore, as shown in Fig. 11, the thickness of the partition plate 1101 is increased at a position where the focal length is longer to accommodate the varying light point size. For example, the thickness of the partition plate 1101 decreases toward the lower part or bottom surface of the structure 1100. As such, the thickness of the partition plate 303 is determined by, for example, the focal length. By increasing the thickness of the partition plate 303 as the focal length of the laser light 401 increases, color mixing can be prevented and an ideal monochrome can be expressed.

### (Description of Laser Light Source According to Fourth Embodiment)

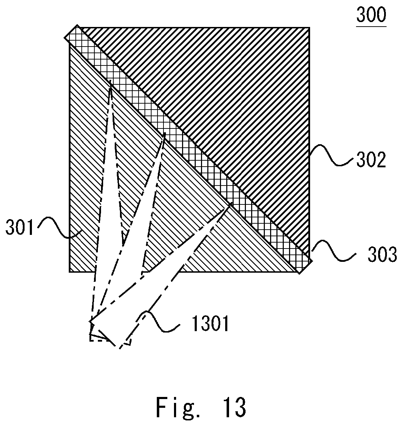

Fig. 12 is a diagram illustrating the configuration of a laser light source when a related structure is irradiated with laser light. Fig. 13 is a diagram illustrating the configuration of a laser light source when a structure according to a fourth embodiment is irradiated with laser light. The laser light source according to the fourth embodiment will be described with reference to Figs. 12 and 13.

As shown in Fig. 12, the angle of incidence of the laser light 401 varies depending on the scanning angle. Scanning with the laser light 401 varies the angle at which the laser light 401 enters the partition plate 303. The partition plate 303 acts as an optical boundary surface, and in some cases, the laser light 401 may be totally reflected due to differences in refractive index. This occurs because laser light 401 is radiated for scanning from the bottom surface directly below the center of structure 300.

In contrast, as shown in Fig. 13, the laser light 1301 is radiated for scanning from the bottom surface diagonally below the center of structure 300, rather than that the laser light 401 is radiated for scanning from the bottom surface directly below the center of structure 300. In this case, the angle of incidence of the laser light 1301 on partition plate 303 is made more obtuse than when the laser light 1301 is radiated from directly below. This allows the laser light 1301 to be incident on partition plate 303 at an angle within a predetermined range in which the laser light 1301 is not totally reflected.

The laser light 1301 is radiated for scanning from the bottom surface diagonally below the center of the structure 300 to prevent total reflection by the partition plate. For this reason, the light source 702 is positioned diagonally below the bottom surface of structure 300. Alternatively, the x-axis and y-axis direction adjustment mechanism 705 is positioned diagonally below the bottom surface of the structure 300. For example, the light source 702 or the x-axis and y-axis direction adjustment mechanism 705 may be positioned outside or inside the rotation mechanism 707 with respect to the structure 300. Furthermore, in addition to the x-axis and y-axis direction adjustment mechanism 705, a mirror may be used to adjust the optical path so that the laser light 1301 is radiated from diagonally below the bottom surface of the structure 300.

When the laser light 1301 is radiated from the diagonally below the bottom surface so that the laser light 1301 is incident at a more obtuse angle with respect to the partition plate 303, the focal length increases toward the bottom part. For this reason, the thickness of the partition plate 303 may be increased toward the bottom part.

If the laser light 401 and the partition plate 303 are parallel, there is a possibility that the laser light will not focus at the desired position due to aberration. Therefore, it is preferable that the angle between the laser light 401 and the partition plate 303 be greater than 0°.

Note that the present invention is not limited to the above-described embodiments, and modifications can be made as appropriate without departing from the spirit and scope of the present invention.

This application claims priority based on Japanese Patent Application No. 2023-124249, filed July 31, 2023, the entire disclosure of which is incorporated herein by reference.

### Industrial Applicability

The structure disclosed in the present disclosure can be used in display apparatuses.

### Reference Signs List

100 STRUCTURE, 101 FIRST SPACE, 102 SECOND SPACE, 103 PARTITION PLATE, 104 PARTITION PLATE VERTICAL PORTION, 105 CENTRAL AXIS, 300 STRUCTURE, 301 FIRST SPACE, 302 SECOND SPACE, 303 PARTITION PLATE, 401 LASER LIGHT, 501 DRAWING AREA, 601 BLUE-EMITTING REGION, 602 RED-EMITTING REGION, 603 PARTITION PLATE, 604 DRAWING REGION, 700 DISPLAY APPARATUS, 701 STRUCTURE, 702 LIGHT SOURCE, 703 CONTROL DEVICE, 704 z-AXIS DIRECTION ADJUSTMENT MECHANISM, 705 x-Axis And y-AXIS DIRECTION ADJUSTMENT MECHANISM, 706 SENSOR, 707 ROTATION MECHANISM, 801 DRAWING POINT INFORMATION GENERATION UNIT, 802 DRAWING IMAGE ANALYSIS UNIT, 803 DRAWING POSITION ADJUSTMENT UNIT, 804 LIGHT SOURCE CONTROL UNIT, 1100 STRUCTURE, 1101 PARTITION PLATE, 1301 LASER LIGHT

## Claims

1. A structure comprising a partition plate that separates a first space from a second space, wherein
the first space is filled with a gas that emits light of a first color when irradiated with laser light,
the second space is filled with a gas that emits light of a second color when irradiated with the laser light, and
the partition plate contains a phosphor that emits light of a third color when irradiated with the laser light.

2. The structure according to claim 1, wherein
the structure is cylindrical, and
the partition plate is spiral-shaped.

3. The structure according to claim 1, wherein
the structure is prismatic, and
the partition plate is flat plate-shaped.

4. The structure according to claim 3, wherein the partition plate separates the first space from the second space to equalize volumes of the spaces.

5. The structure according to any one of claims 1 to 4, wherein the partition plate has a greater thickness as a focal length of the laser light increases.

6. A display apparatus comprising:
the structure according to claim 1;
a mechanism that rotates the structure; and
a light source that radiates the laser light from a bottom surface of the structure.

7. The display apparatus according to claim 6, wherein an angle of incidence of the laser light is within a predetermined range in which the laser light is not totally reflected by the partition plate.

8. The display apparatus according to claim 6, wherein
the structure is prismatic, and
the mechanism that rotates the structure is a mechanism that rotates the structure with a radius defined by an extension of an axis that passes through a center of the structure and is perpendicular to a side surface of the structure.
